# EUROPÄISCHE PATENTANMELDUNG

(11) **EP 3 493 371 A1**
(43) Veröffentlichungstag der Anmeldung: **05.06.2019**
(21) Anmeldenummer: 17204676.5
(22) Anmeldetag: 30.11.2017
(51) Int. Cl.: H02K 1/26, H02K 15/00, H02K 15/02, H02K 17/16

(54) **VERSTÄRKTER KÄFIGLÄUFER**

(71) Anmelder: Siemens Aktiengesellschaft, 80333 München (DE)
(72) Erfinder: Schneider, Alexandra, 97618 Heustreu (DE)

(57) **Zusammenfassung**

Die Erfindung betrifft ein Verfahren zur Herstellung eines Rotors (1) einer elektrischen Maschine. In einem Rotorkern (3) befindliche Nuten und/oder eine ringförmige Aussparung (41, 42) werden unter Anwendung eines additiven Fertigungsverfahrens mit wenigstens zwei Materialien unterschiedlicher Festigkeit gefüllt. Während eines durch das additive Fertigungsverfahren begründeten schichtweisen Aufbaus der Füllung wird eine Wabenstruktur geschaffen, wobei mittels eines Materials einer ersten Festigkeit ein Wabenstrang ausgebildet wird. Der Wabenstrang wird aus wenigstens zwei unterschiedlichen Wabenschichten ausgebildet. Mittels eines Materials einer zweiten Festigkeit wird eine Wabenfüllung ausgebildet.

## Beschreibung

Die Erfindung betrifft ein Verfahren zur Herstellung eines Rotors einer elektrischen Maschine, wobei der Rotor einen konzentrisch zur Rotorachse angeordneten Rotorkern aufweist, wobei der Rotorkern Nuten aufweist, wobei der Rotorkern an jeweiligen axialen Enden der Nuten jeweils eine ringförmige konzentrisch zur Rotorachse angeordnete Aussparung aufweist, welche die Nuten verbindet, wobei die Nuten und/oder die jeweilige ringförmige Aussparung unter Anwendung eines additiven Fertigungsverfahrens mit wenigstens zwei Materialien unterschiedlicher Festigkeit gefüllt werden.

Bisher werden Kurzschlusskäfige, die Käfigstäbe im Rotorpaket und Kurzschlussringe an den Paketenden umfassen, mittels verschiedener Verfahren gefertigt. Bei einem Kupferdruckgussverfahren werden die Käfigstäbe und Kurzschlussringe in im Rotorpaket befindliche Nuten und Aussparungen gegossen. Jedoch können Rotoren aus einem Kupferkäfig nicht die gewünschten hohen Umfangsgeschwindigkeiten von über 110 bis 120 m/s bewerkstelligen.

Daher werden heute auch Armierungen z. B. aus Stahlscheiben axial in den Kurzschlussring eingefügt und gelötet oder geschweißt. Dies ist jedoch aufwendig.

Andererseits besteht auch die Möglichkeit, Stahlringe auf den abgedrehten Kurzschlussring aufzuschrumpfen, auch radiale Armierung genannt. Dies ist jedoch für Einbaumotoren oder Asynchronmotoren ohne Anlaufkäfig sehr schwierig, da diese nicht gefügt werden können.

Der Erfindung liegt die Aufgabe zugrunde, ein Verfahren zur Herstellung eines Rotors einer elektrischen Maschine zu finden, welches dem Rotor hohe Umfangsgeschwindigkeiten erlaubt.

Weiterhin liegt der Erfindung die Aufgabe zugrunde einen entsprechenden Kurzschlussring zu schaffen.

Die Lösung der gestellten Aufgabe gelingt durch ein Verfahren nach Anspruch 1, d. h. ein Verfahren zur Herstellung eines Rotors einer elektrischen Maschine, wobei der Rotor einen konzentrisch zur Rotorachse angeordneten Rotorkern aufweist, wobei der Rotorkern Nuten aufweist, wobei der Rotorkern an jeweiligen axialen Enden der Nuten jeweils eine ringförmige konzentrisch zur Rotorachse angeordnete Aussparung aufweist, welche die Nuten verbindet, wobei die Nuten und/oder die jeweilige ringförmige Aussparung unter Anwendung eines additiven Fertigungsverfahrens mit wenigstens zwei Materialien unterschiedlicher Festigkeit gefüllt werden, wobei während eines durch das additive Fertigungsverfahren begründeten schichtweisen Aufbaus der Füllung eine Wabenstruktur geschaffen wird, wobei mittels eines Materials einer ersten Festigkeit ein Wabenstrang ausgebildet wird, wobei der Wabenstrang aus wenigstens zwei unterschiedlichen Wabenschichten ausgebildet wird, wobei mittels eines Materials eine gegenüber der ersten Festigkeit geringeren zweiten Festigkeit eine Wabenfüllung ausgebildet wird.

Zudem gelingt die Aufgabe durch einen Kurzschlussring für einen Rotor einer elektrischen Maschine, der nach diesem Verfahren hergestellt wurde.

Ferner gelingt die Lösung der Aufgabe durch eine elektrische Maschine mit einem derartigen Kurzschlussring.

Weitere vorteilhafte Ausführungen ergeben sich aus den Unteransprüchen.

Eine Wabe der Wabenstruktur kann verschiedene Formen annehmen. Die Wabe kann beispielsweise als ein Kreis, ein Drei- oder Mehreck sowie insbesondere ein Achteck ausgebildet sein.

Der Vorteil der Erfindung liegt darin, dass eine Armierung in den Kurzschlussring und/oder in die Käfigstäbe eingebracht wird und ohne zusätzliche Bauteile während des additiven Fertigungsverfahrens durch das Drucken von zwei Materialien unterschiedlicher Festigkeit hergestellt werden kann.

Erfindungsgemäß wird der Wabenstrang aus wenigstens zwei unterschiedlichen Wabenschichten ausgebildet. Unterschiedlich bedeutet hierbei, dass zwei gleiche Wabenschichten gegeneinander verdreht aneinander gefügt werden oder zwei verschiedene Wabenschichten aneinander gefügt werden.

Die Wabenstruktur umfasst einen Wabenstrang sowie eine Wabenfüllung. Der Wabenstrang umfasst wenigstens zwei Wabenschichten. Vorteilhaft wird wie bei einer Bienenwabe oder im Inneren eines Pappkartons eine Wabenstruktur mit einem Material einer ersten Festigkeit geschaffen.

Die Wabenfüllung wird mit einem Material einer zweiten Festigkeit ausgebildet. Das Verfahren basiert auf einer additiven Fertigung, wodurch die Wabenfüllung und die Wabenschicht schichtweise aufgebaut werden.

In einer vorteilhaften Ausführung der Erfindung wird durch die Füllung der Nuten ein Kurzschlusskäfig und/oder durch die Füllung der ringförmigen konzentrisch zur Rotorachse angeordneten Aussparung wenigstens ein Kurzschlussring gebildet.

In einer vorteilhaften Ausführung der Erfindung werden die Wabenschichten ineinandergreifend angeordnet. Es ist auch eine gedrehte, versetzte oder überlappende Anordnung möglich.

In einer weiteren vorteilhaften Ausführung der Erfindung werden die Wabenschichten unmittelbar aneinander grenzend angeordnet. Hierbei können sich die einzelnen Waben der Schichten berühren. Jedoch sind auch Schnittlinien mit anderen Waben möglich.

In einer weiteren vorteilhaften Ausführung der Erfindung greifen die Wabenfüllungen ineinander.

In einer weiteren vorteilhaften Ausführung der Erfindung wird als Material einer ersten Festigkeit Stahl oder Titan oder deren Legierungen eingesetzt. Dies gewährleistet eine Armierung des Kurzschlussrings bzw. des Kurzschlusskäfigs und erlaubt hohe Umfangsgeschwindigkeiten des Rotors.

In einer weiteren vorteilhaften Ausführung der Erfindung wird als Material einer zweiten Festigkeit Kupfer oder Aluminium oder deren Legierungen eingesetzt. Dies ermöglicht einen Stromfluss bzw. ein Leiten von Strom.

Der Stromfluss erfolgt vorteilhaft durch die Wabenfüllungen. Daher greifen vorteilhaft die Wabenfüllungen ineinander, sodass ein Stromfluss entlang des Kurzschlussrings und der Käfigstäbe gewährleistet wird.

Die Erfindung eignet sich besonders gut für einen Rotor einer Asynchronmaschine, von welcher meist eine hohe Leistung und/oder Effizienz verlangt wird. Um die Effizienz und/oder Leistung der Asynchronmaschine zu steigern, kann beispielsweise ein Kupferanteil in einem Kurzschlussring oder beiden Kurzschlussringen und/oder den Käfigstäben erhöht werden. Durch die Wabenstruktur ist der mit der Wabenstruktur versehene Rotor der Asynchronmaschine trotz z. B. höherem Kupferanteils widerstandsfähig und für hohe Umfangsgeschwindigkeiten geeignet.

In einer weiteren vorteilhaften Ausführung der Erfindung wird als additives Fertigungsverfahren ein Metall-Pulver-Auftragsverfahren (MPA) und/oder ein Auftrag-Schweiß-Verfahren angewendet. Jedoch eignen sich auch andere additive Fertigungsverfahren.

Als Auftrag-Schweiß-Verfahren können beispielsweise die folgenden Verfahren angewendet werden: DMD-Verfahren (Direct Metal Deposition), LMD-Verfahren (Laser Metal Deposition) und 3DMP-Verfahren (3D Metal Print).

Vorzugsweise wird das MPA-Verfahren oder das 3DMP-Verfahren angewendet.

Beim MPA-Verfahren wird ein Hauptgas vorzugsweise Wasserdampf in einer Lavaldüse beschleunigt. Kurz vor dem Lavalpunkt werden Pulverpartikel injiziert. Die Pulverpartikel werden auf Überschallgeschwindigkeit beschleunigt und treffen so auf einem Substrat oder einem Bauteil auf. Die hohe magnetische Energie des Pulverpartikels wird beim Aufprall in Wärme umgewandelt, wodurch der Partikel anhaftet. Da die Pulverpartikel nicht aufgeschmolzen werden, findet nur ein geringer Energieeintrag in das Bauteil statt.

Beim MPA-Verfahren können mehrere Düsen gleichzeitig verschiedene Pulverpartikel auftragen. Somit kann bei der Herstellung eines Bauteils eine Wabenstruktur geschaffen werden, die wenigstens zwei Materialien unterschiedlicher Festigkeit aufweist. Durch diese Armierung, die stoffschlüssig mit dem leitfähigen Teil des Kurzschlussrings verbunden ist, wird der Rotor beständig gegenüber Fliehkräften und ermöglicht höhere Drehzahlen.

Das 3DMP-Verfahren basiert auf Lichtbogenschweißen und verwendet als Ausgangsmaterial Draht. Schweißraupe für Schweißraupe wird hiermit ein Werkstück gedruckt. Das 3DMP-Verfahren bietet den Vorteil, dass viele Materialien bereits als Draht erhältlich sind, nicht jedoch als Pulver. Zudem ist Draht als Werkstoff günstiger als Werkstoff in Pulverform. Das 3DMP-Verfahren bietet ferner eine hohe Aufbaurate.

In einer weiteren vorteilhaften Ausführung der Erfindung wird der Kurzschlussring mit einer anzubindenden Welle stoffschlüssig verbunden. Auch dies ist mittels des additiven Fertigungsverfahrens, insbesondere mittels des MPA-Verfahrens, leicht möglich.

Durch die hohe kinetische Energie der Partikel beim Aufprall ist bei Verwendung des MPA-Verfahrens zudem eine stoffschlüssige Verbindung des Kurzschlussrings mit einer anzubindenden Welle leicht möglich. Die stoffschlüssige Verbindung des Kurzschlussrings an die Welle erlaubt zudem höhere Drehzahlen.

Ferner gelingt die Lösung der Aufgabe durch einen Kurzschlussring für einen Rotor einer elektrischen Maschine, der nach dem beschriebenen Verfahren hergestellt wurde.

In einer vorteilhaften Ausführung des Kurzschlussrings ist mittels eines Materials einer ersten Festigkeit, vorzugsweise Stahl oder Titan oder deren Legierungen, ein Wabenstrang ausgebildet, wobei der Wabenstrang aus wenigstens zwei unterschiedlichen Wabenschichten ausgebildet ist und wobei mittels eines Materials einer gegenüber der ersten Festigkeit geringeren zweiten Festigkeit, vorzugsweise Kupfer oder Aluminium oder deren Legierungen, eine Wabenfüllung ausgebildet ist.

In einer weiteren vorteilhaften Ausführung der Erfindung sind die Wabenschichten ineinander greifend angeordnet und/oder unmittelbar aneinander angrenzend angeordnet, wobei die Wabenfüllungen ineinander greifen.

Diese Wabenstruktur ermöglicht, dass das Kupfer und/oder Aluminium oder deren Legierungen stabil im Kurzschlussring und/oder in den Käfigstäben des Kurzschlusskäfigs gehalten wird. Das Kupfer und/oder Aluminium oder deren Legierungen wird auf diese Weise fixiert, wodurch höhere Umfangsgeschwindigkeiten für den Rotor ermöglich werden.

Besonders in den Käfigstäben zeichnet sich die eingedruckte Wabenstruktur als Stabilisator aus.

In einer weiteren vorteilhaften Ausführung der Erfindung ist der Kurschlussring mit einer an den Rotor der elektrischen

Maschine anzubindenden Welle, insbesondere aus Stahl, per Stoffschluss verbunden.

Die Herstellung des Rotors mittels des beschriebenen Verfahrens, welches auf einer additiven Fertigung basiert, bringt den Vorteil, dass auch Rotoren in kleineren Serien kostengünstig und wenig zeitaufwändig hergestellt werden können.

Im Folgenden wird die Erfindung anhand der in den Figuren dargestellten Ausführungsbeispiele näher beschrieben und erläutert. Es zeigen:
FIG 1 eine Ausgestaltung eines Rotors einer elektrischen Maschine,
FIG 2 einen Querschnitt durch einen Käfigläufer,
FIG 3 einen Querschnitt durch einen Kurzschlussring mit erfindungsgemäßer Wabenstruktur,
FIG 4 einen weiteren Querschnitt durch einen Kurzschlussring mit erfindungsgemäßer Wabenstruktur,
FIG 5 einen Querschnitt durch einen Kurzschluss mit Kreisstruktur,
FIG 6 einen Querschnitt durch einen Kurzschlussring mit Dreieckstruktur,
FIG 7 einen Ablauf eines erfindungsgemäßen Verfahrens zur Herstellung.

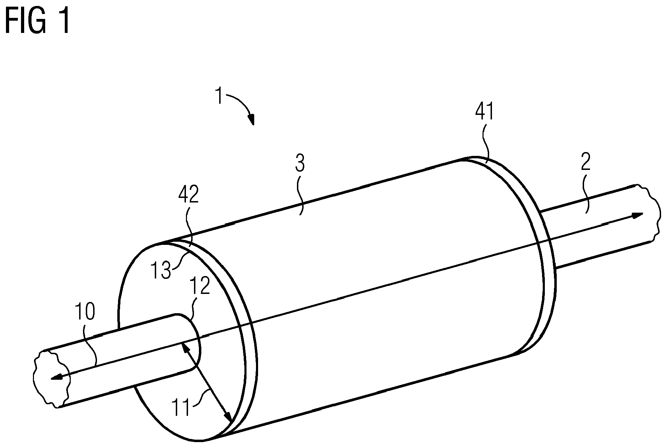

FIG 1 zeigt eine Ausgestaltung eines Rotors 1 einer elektrischen Maschine. Ein Rotor 1 umfasst eine Welle 2, einen Rotorkern 3 sowie an den jeweiligen axialen Enden des Rotorkerns 3 je einen Kurzschlussring 41 bzw. 42.

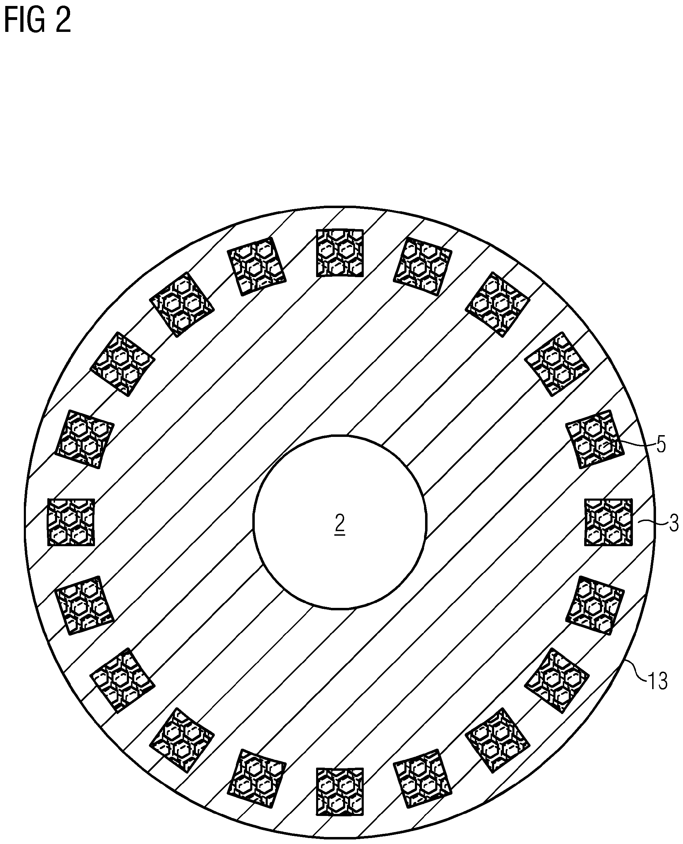

Zudem zeigt FIG 1 eine Axialrichtung 10, eine Radialrichtung 11, einen Innenradius 12 und einen Außenradius 13. Der Rotorkern 3 weist vorzugsweise ein Blechpaket auf. Das Blechpaket weist - wie später in FIG 2 beschrieben - Nuten auf, in welche Käfigstäbe zum Erhalt eines Käfigläufers eingefügt werden. Die Käfigstäbe werden mittels der Kurschlussringe 41 bzw. 42 kurzgeschlossen. Die Welle 2 reicht im Wesentlichen durch einen konzentrischen Mittelpunkt des Blechpakets.

FIG 2 zeigt einen Querschnitt durch einen Käfigläufer. Durch den Querschnitt wird deutlich, dass sich die Nuten 5 im Wesentlichen in der Nähe des Außenradius 13 befinden. Im konzentrischen Mittelpunkt befindet sich die Welle 2. Die Nuten 5 stellen Aussparungen dar, in welche Käfigstäbe zum Erhalt eines Käfigläufers eingefügt werden können.

Die Käfigstäbe können aus Kupfer und/oder Aluminium oder deren Legierungen bestehen, Kupfer und/oder Aluminium oder deren Legierungen aufweisen oder die erfindungsgemäße Wabenstruktur - wie in FIG 2 gezeigt - aufweisen.

Die Wabenstruktur umfasst einen Wabenstrang sowie eine Wabenfüllung. Der Wabenstrang weist vorzugsweise ein Material einer ersten Festigkeit, vorzugsweise Stahl und/oder Titan oder deren Legierungen, auf. Die Wabenfüllung weist ein Material einer zweiten Festigkeit auf, vorzugsweise Kupfer und/oder Aluminium oder deren Legierungen.

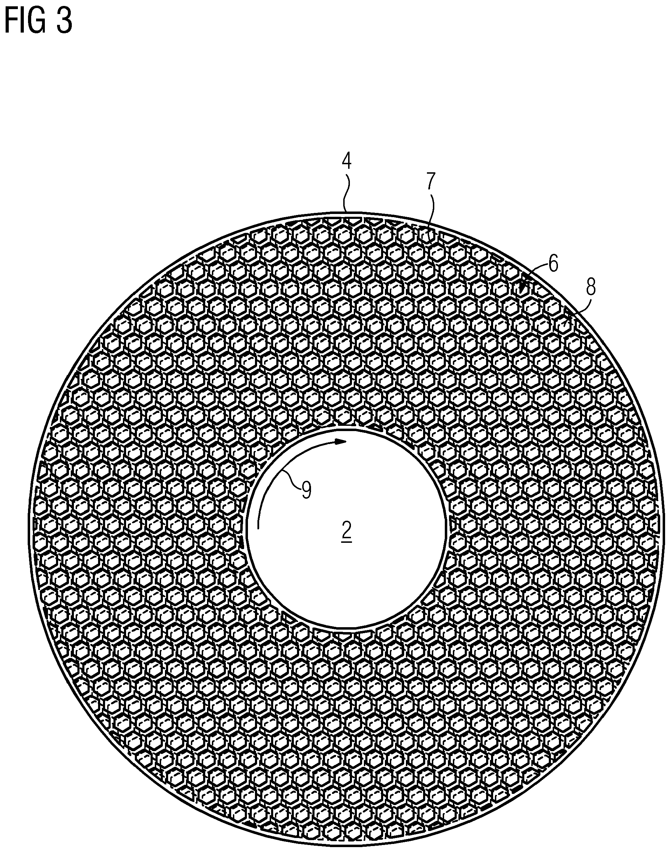

FIG 3 zeigt einen Querschnitt durch einen Kurzschlussring 4 mit erfindungsgemäßer Wabenstruktur 6. Der Kurzschlussring 4 zeigt die erfindungsgemäße Wabenstruktur 6. Die Wabenstruktur 6 durchsetzt vorzugsweise den gesamten Kurzschlussring 4 und spart einen Bereich für die Welle 2 im Wesentlichen im konzentrischen Mittelpunkt des Kurzschlussrings 4 aus.

FIG 3 zeigt zudem eine Rotationsrichtung 9. FIG 3 macht deutlich, wie die erfindungsgemäße Wabenstruktur 6 aufgebaut ist. Die Wabenstruktur 6 umfasst den Wabenstrang 7 sowie die Wabenfüllung 8. FIG 3 zeigt, dass der Wabenstrang 7 aus wenigstens zwei unterschiedlichen Wabenschichten ausgebildet ist. Die Wabenschichten können ineinander greifend gedreht, versetzt oder überlappend angeordnet sein.

FIG 3 zeigt eine versetzte Anordnung. Die Wabenschichten sind vorzugsweise unmittelbar aneinander angrenzend angeordnet. Die Wabenschichten können sich hierbei berühren oder auch Schnittlinien bilden. Der Wabenstrang 7 dient einer Armierung des Kurzschlussrings 4. Die Wabenfüllung 8 gewährleistet einen Stromfluss in den Kurzschlussring 4.

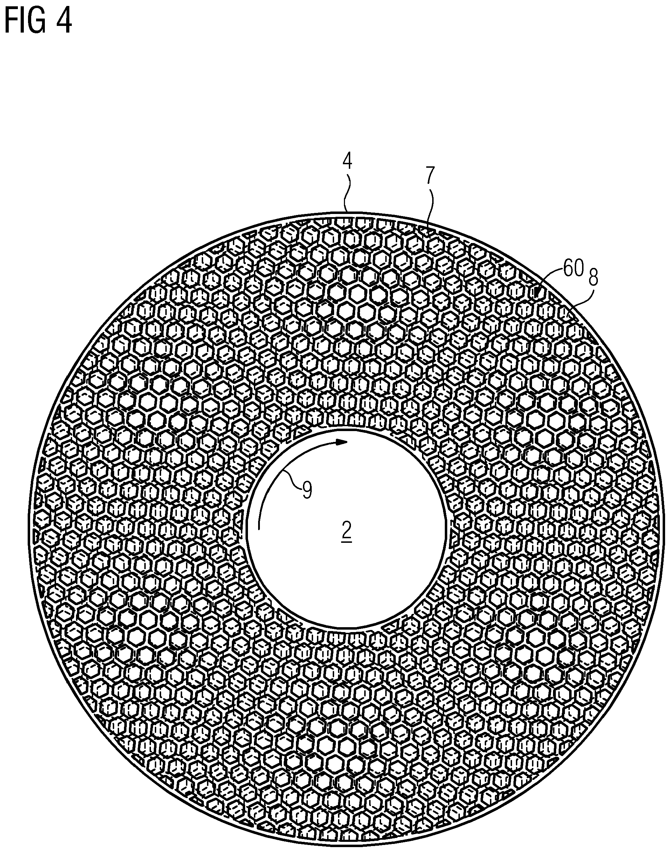

FIG 4 zeigt einen weiteren Querschnitt durch einen Kurzschlussring 4 mit erfindungsgemäßer Wabenstruktur 60. FIG 4 ist ähnlich zur FIG 3, jedoch sind hier die Wabenschichten gegeneinander verdreht angeordnet. Die Wabenschichten sind entsprechend der Rotationsrichtung 9 gegeneinander verdreht.

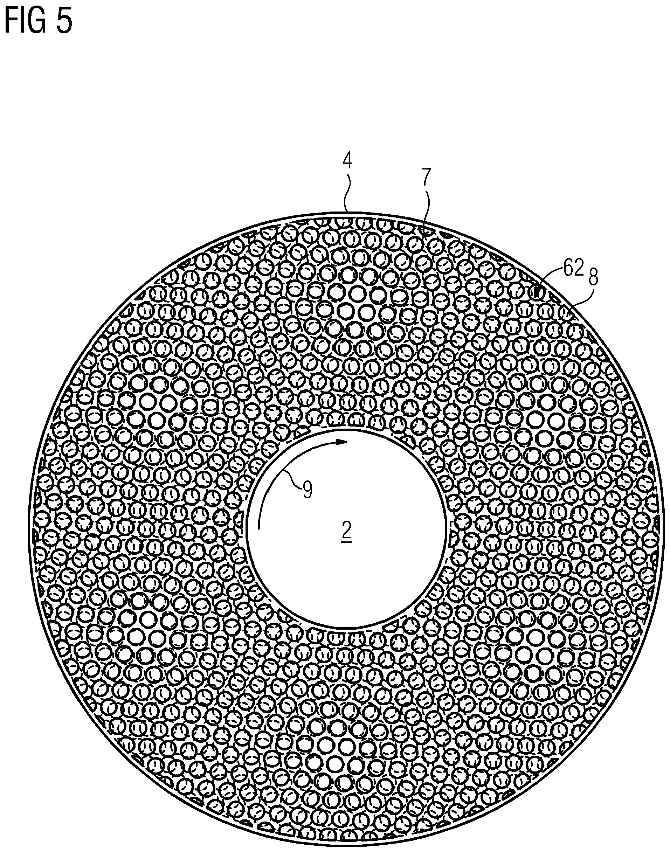

FIG 5 zeigt einen Querschnitt durch einen Kurzschlussring mit Kreisstruktur 62. Die erfindungsgemäße Wabenstruktur ist in FIG 5 als Kreisstruktur 62 ausgebildet. Diese Alternative bietet den Vorteil, dass eine Kraftverteilung - besonders im Kurzschlussring - sehr gleichmäßig ausgebildet ist.

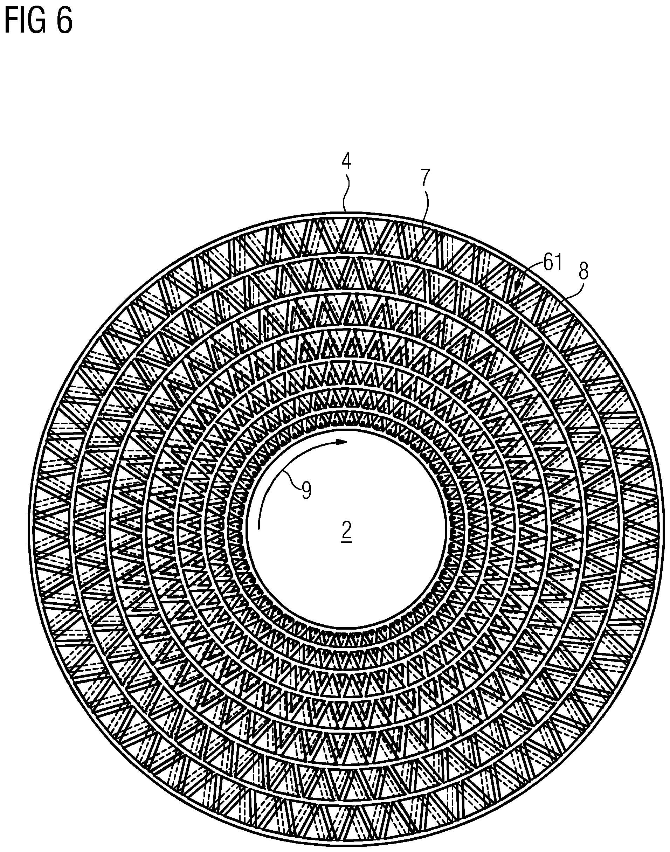

FIG 6 zeigt einen Querschnitt durch einen Kurzschlussring 4 mit Dreieckstruktur 61. Die Wabenstruktur ist in FIG 6 als Dreieckstruktur 61 dargestellt

FIG 6 zeigt zudem, dass die einzelnen Dreiecke am Innenradius bzw. in der Nähe des Innenradius kleiner sind als in der Nähe des Außenradius. Aus Gründen des Formschlusses zeigt eine ausgebildete Spitze des Dreiecks vorzugsweise in Richtung des konzentrischen Mittelpunkts.

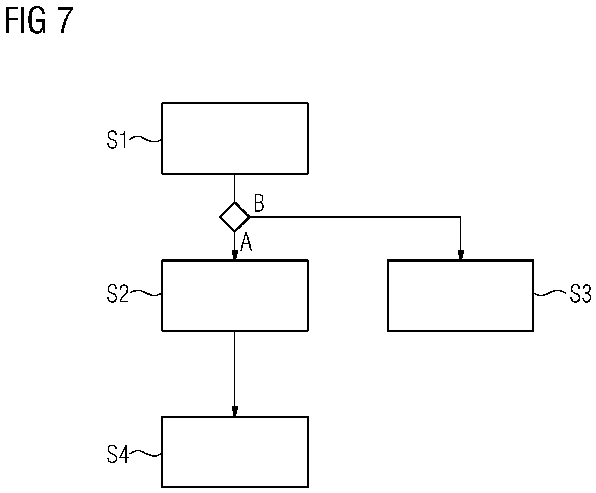

FIG 7 zeigt einen Ablauf eines erfindungsgemäßen Verfahrens zur Herstellung. Nach einer bevorzugten Herstellungsart des als Käfigläufer ausgeführten Rotors wird im Verfahrensschritt S1 ein Rotorpaket, das über Nuten verfügt, bereitgestellt.

Anschließend gibt es zwei Möglichkeiten: Entweder es werden über Möglichkeit A im Verfahrensschritt S2 bereits vorgefertigte Kupferstäbe in die vorhandenen Nuten eingefügt. Diese Kupferstäbe erfüllen die Funktion der Käfigstäbe des Käfigläufers. Anschließend werden im Verfahrensschritt S4 Kurzschlussringe mittels eines additiven Fertigungsverfahrens an die jeweilig axialen Enden der Käfigstäbe angefügt. Hierbei werden die Kurzschlussringe mit der erfindungsgemäßen Wabenstruktur ausgestattet.

Ein alternativer Weg B ist der folgende: Nach dem Verfahrensschritt S1, also der Bereitstellung des Rotorpakets, werden sowohl die Nuten als auch die Aussparungen, welche für die Bildung des Kurzschlussrings bzw. der Kurzschlussringe vorgesehen sind, mittels des additiven Fertigungsverfahrens schichtweise im Verfahrensschritt S3 gefüllt.

Auf diese Weise sind die Käfigstäbe bereits mit dem Kurzschlussring verbunden, da diese während einer additiven Fertigung hergestellt werden. Sowohl die Käfigstäbe als auch der Kurzschlussring bzw. die Kurzschlussringe an den jeweiligen axialen Enden des Rotorkerns verfügen über die erfindungsgemäße Wabenstruktur und somit über eine Stabilität bringende Armierung mittels des Wabenstrangs aus Stahl und/oder Titan oder deren Legierungen. Der Stromfluss wird effizient durch die Wabenfüllung aus Kupfer und/oder Aluminium oder deren Legierungen gewährleistet.

## Patentansprüche

1. Verfahren zur Herstellung eines Rotors (1) einer elektrischen Maschine,
- wobei der Rotor (1) einen konzentrisch zur Rotorachse angeordneten Rotorkern (3) aufweist,
- wobei der Rotorkern (3) Nuten (5) aufweist,
- wobei der Rotorkern (3) am jeweiligen axialen Ende der Nuten jeweils eine ringförmige, konzentrisch zur Rotorachse angeordnete Aussparung aufweist, welche die Nuten (5) verbindet,
- wobei die Nuten (5) und/oder die jeweilige ringförmige Aussparung unter Anwendung eines additiven Fertigungsverfahrens mit wenigstens zwei Materialien unterschiedlicher Festigkeit gefüllt werden,
**dadurch gekennzeichnet, dass** während eines durch das additive Fertigungsverfahren begründeten schichtweisen Aufbaus der Füllung eine Wabenstruktur (6, 60) geschaffen wird,
wobei mittels eines Materials einer ersten Festigkeit ein Wabenstrang (7) ausgebildet wird, wobei der Wabenstrang (7) aus wenigstens zwei unterschiedlichen Wabenschichten ausgebildet wird,
wobei mittels eines Materials einer gegenüber der ersten Festigkeit geringeren zweiten Festigkeit eine Wabenfüllung (8) ausgebildet wird.

2. Verfahren nach Anspruch 1, wobei durch die Füllung der Nuten ein Kurzschlusskäfig und/oder durch die Füllung der ringförmigen, konzentrisch zur Rotorachse angeordneten Aussparung wenigstens ein Kurzschlussring (4, 41, 42) gebildet wird.

3. Verfahren nach Anspruch 1 oder 2, wobei die Wabenschichten ineinander greifend angeordnet werden.

4. Verfahren nach einem der Ansprüche 1 oder 2, wobei die Wabenschichten unmittelbar aneinander grenzend angeordnet werden.

5. Verfahren nach einem der vorhergehenden Ansprüche, wobei die Wabenfüllungen (8) ineinander greifen.

6. Verfahren nach einem der vorhergehenden Ansprüche, wobei als Material einer ersten Festigkeit Stahl und/oder Titan oder deren Legierungen zur Armierung eingesetzt wird.

7. Verfahren nach einem der vorhergehenden Ansprüche, wobei als Material einer zweiten Festigkeit Kupfer und/oder Aluminium oder deren Legierungen zum Leiten von Strom eingesetzt wird.

8. Verfahren nach einem der vorhergehenden Ansprüche, wobei als additives Fertigungsverfahren ein Metall-PulverAuftragsverfahren und/oder ein Auftrag-Schweiß-Verfahren angewendet wird.

9. Verfahren nach einem der vorhergehenden Ansprüche, wobei der Kurzschlussring mit einer anzubindenden Welle (2) stoffschlüssig verbunden wird.

10. Kurzschlussring für einen Rotor (1) einer elektrischen Maschine, der nach einem Verfahren gemäß einem der Ansprüche 1 bis 9 hergestellt wurde.

11. Kurzschlussring für einen Rotor (1) einer elektrischen Maschine, wobei mittels eines Materials einer ersten Festigkeit, vorzugsweise Stahl und/oder Titan oder deren Legierungen, ein Wabenstrang (7) ausgebildet ist, wobei der Wabenstrang (7) aus wenigstens zwei unterschiedlichen Wabenschichten ausgebildet ist,
wobei mittels eines Materials einer gegenüber der ersten Festigkeit geringeren zweiten Festigkeit, vorzugsweise Kupfer und/oder Aluminium oder deren Legierungen, eine Wabenfüllung (8) ausgebildet ist.

12. Kurzschlussring für einen Rotor (1) einer elektrischen Maschine nach Anspruch 11, wobei die Wabenschichten ineinander greifend angeordnet sind und/oder wobei die Wabenschichten unmittelbar aneinander grenzend angeordnet, wobei die Wabenfüllungen (8) ineinander greifen.

13. Kurzschlussring nach einem der Ansprüche 11 oder 12, wobei der Kurzschlussring (4, 41, 4) mit einer an den Rotor (1) der elektrischen Maschine anzubindenden Welle (2), insbesondere aus Stahl, per Stoffschluss verbunden ist.

14. Elektrische Maschine aufweisend einen Kurzschlussring (4, 41, 42) nach einem der Ansprüche 10 bis 13.
